# DEMANDE DE BREVET EUROPEEN

(11) **EP 2 584 533 A1**
(43) Date de publication de la demande: **24.04.2013**
(21) Numéro de dépôt: 12188681.6
(22) Date de dépôt: 16.10.2012
(51) Int. Cl.: G06T 17/00, G06K 9/46, G06K 9/00

(54) **Procédé de reconstruction 3D d'un objet d'une scène**

(30) Priorité: 21.10.2011 FR 1103229
(71) Demandeur: Thales, 92200 Neuilly Sur Seine (FR); Sispia, 94300 Vincennes (FR)
(72) Inventeur: Berechet, Ion, 943000 VINCENNES (FR); Berginc, Gérard, 94320 THIAIS (FR); Berechet, Stefan, 94340 JOINVILLE LE PONT (FR)
(74) Mandataire: Henriot, Marie-Pierre

(57) **Abrégé**

L'invention concerne un procédé de reconstruction 3D d'un objet à partir de signaux rétrodiffusés et captés, qui comprend :
- Etape 1) générer à partir des signaux captés, des points 3D auxquels est respectivement affectée leur intensité de rétrodiffusion qui forment un ensemble A de données reconstruites,
- Etape 2) à partir de A, extraire un ensemble B de données dont les points sont inscrits dans un volume contenant l'objet, en fonction de caractéristiques F2 de volume.
- Etape 3) à partir de B, extraire un ensemble C de données caractérisant la surface externe de l'objet, cette surface présentant des zones lacunaires, en fonction d'un critère d'extraction,
- Etape 4) à partir de C, remplir les zones lacunaires par génération de surface tridimensionnelle pour obtenir un ensemble D de données complétées de l'objet, sans recourir à une base de données extérieure,
- Etape 5) identifier l'objet à partir de D,

lorsque l'identification de l'étape 5) n'est pas réussie, réitérer les étapes 3), 4) et 5) avec un nouveau critère F1.

## Description

Le domaine de l'invention est celui de l'imagerie électromagnétique ou acoustique active ou passive tridimensionnelle dans lequel il s'agit de reconstruire des images tridimensionnelles d'un objet contenant l'ensemble des informations dans les trois dimensions de l'objet quel que soit le plan d'observation.

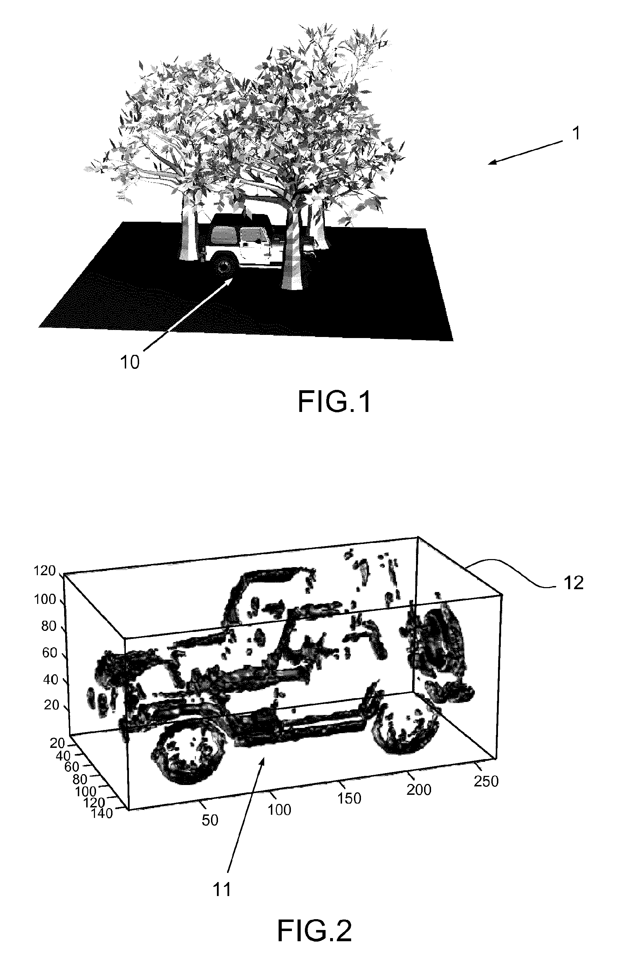

Dans le cadre de l'imagerie laser, un ladar (Laser Radar) illumine une scène 1 contenant un objet 10 qui est partiellement camouflé par tout obstacle (des arbres sur la figure) laissant passer une partie de l'onde laser comme illustré figure 1. L'onde est ainsi rétro-réfléchie par l'objet 10 et le signal est analysé par le système Ladar. Différentes positions du Ladar permettent de reconstruire une image 3D.

Dans le cadre de l'imagerie passive, une image 3D est reconstruite en utilisant les réflexions sur l'objet de sources externes (soleil, lune, fond de ciel....) et/ou l'émission thermique propre de l'objet.

Dans ce domaine de l'imagerie 3D (passive ou active), il est nécessaire d'obtenir un ensemble de mesures relatives à l'objet à reconstruire dépendant d'un paramètre d'observation angulaire variable, cet ensemble de données permettant de reconstruire le volume en appliquant des techniques de reconstruction inverse. D'un point de vue mathématique, la technique fait appel à une mesure directe. Le modèle inverse vient ensuite pour restituer le caractère tridimensionnel de l'objet, utilisant les résultats de la mesure directe.

Lorsque le système d'imagerie forme des images d'une scène contenant un objet partiellement camouflé par des arbres, ou par tout autre obstacle, la création d'une image 3D d'un objet présent dans une scène optronique complexe est incomplète ou lacunaire.

Il existe deux grands types d'imagerie Ladar 3D, la tomographie en réflexion et la profilométrie.

La tomographie utilise des images laser bidimensionnelles dépendant d'un angle variable : la reconstruction de la totalité de la scène commune à l'ensemble des images de la séquence est effectuée par une technique de type transformation de Radon.

La profilométrie basée sur des mesures du temps de vol d'une onde laser, utilise les positions de différents points de rétrodiffusion des objets de la scène classés dans un espace tridimensionnel grâce à la détermination du temps de vol de l'onde laser et à la connaissance du positionnement du faisceau laser. Ces systèmes de profilométrie utilisent des impulsions courtes (de l'ordre de la nanoseconde) afin de discriminer les différents échos sur une même ligne de visée. Nous avons alors un profil des échos sur la ligne de visée.

On peut utiliser des détecteurs à large bande passante afin de restituer le profil de l'écho. Nous avons ainsi pour la bande 1,5 µm des détecteurs InGaAs de type PIN (couche P- couche Intrinsèque- couche N) ou de type photodiode à avalanche ou « APD » acronyme de l'expression anglo-saxonne Avalanche PhotoDiode. Il suffit alors de concaténer un ensemble de nuages de points correspondant à plusieurs positions du système. Il est souvent nécessaire de traiter l'ensemble des données afin de compenser l'erreur de localisation du système. Le procédé peut être complété par un balayage du système de détection et du faisceau laser.

Une autre technique utilise des techniques de « gating » du détecteur permettant de reconstituer des tranches de nuages de points grâce un laser haute cadence. La scène est alors illuminée par un ensemble d'impulsions laser dont la rétrodiffusion est collectée en fonction des différentes profondeurs des objets de la scène, par une matrice de pixels ayant une porte temporelle (« gate ») précise de quelques centaines de picosecondes. L'image est alors obtenue avec une dimension liée à la profondeur. Pour obtenir une image 3D, différents angles de vue sont nécessaires.

Dans les différents scénarios considérés (capteurs portés par un « UAV » acronyme de l'expression anglo-saxonne Unmanned Aerial Vehicle, un hélicoptère ou un avion), la reconstruction est souvent incomplète quand l'objet est camouflé, les signaux rétrodiffusés par l'objet ne permettant plus d'avoir l'ensemble de l'information liée à l'objet. On a alors une information incomplète et lacunaire conduisant à un processus d'inversion partielle fournissant une image 3D incomplète. Le processus de concaténation de nuages de points est considéré comme un processus d'inversion. Un exemple de processus d'inversion partielle est montré figure 2, pour laquelle l'image tridimensionnelle est incomplète, et où l'on peut identifier les zones nécessitant une complétion de données.

Les techniques habituellement utilisées pour compléter l'image tridimensionnelle font appel à une base de données préexistante, une base de données CAO par exemple. L'objet reconstruit est alors comparé à des éléments de cette base de données. Si on obtient une corrélation avec l'objet 3D initial, on complète l'image tridimensionnelle avec les données texturées ou non de la base de données. Ces algorithmes de complétion dépendent de la richesse des modèles CAO dans la base de données, ce qui présente l'énorme désavantage de ne pas être utilisable si l'objet est inconnu dans cette base de données.

Le but de l'invention est de pallier ces inconvénients.

L'invention a pour objet un procédé de reconstruction 3D d'un objet d'une scène exposée à une onde, à partir de signaux rétrodiffusés par la scène et captés, qui comprend :
- Etape 1) générer à partir des signaux captés, un ensemble de points 3D auxquels est respectivement affectée leur intensité de rétrodiffusion par la scène, ces points 3D associés à leur intensité étant désignés ensemble A de données reconstruites,
- Etape 2) à partir de cet ensemble A de données reconstruites, extraire un ensemble B de données dont les points sont inscrits dans un volume contenant l'objet, en fonction de caractéristiques F2 de volume,
- Etape 3) à partir de l'ensemble B, extraire un ensemble C de données caractérisant la surface externe de l'objet, cette surface présentant des zones lacunaires, en fonction d'un critère d'extraction F1,
- Etape 4) à partir des données de C, remplir les zones lacunaires par génération de surface tridimensionnelle pour obtenir un ensemble D de données complétées de l'objet, sans recourir à une base de données extérieure,
- Etape 5) identifier l'objet à partir de l'ensemble D.

Il est principalement **caractérisé en ce que** lorsque l'identification de l'étape 5) n'est pas réussie, on réitére les étapes 3), 4) et 5) avec un nouveau critère F1.

Ce procédé est indépendant d'une base de données externe contenant des modèles de type CAO et permet de compléter l'image tridimensionnelle lacunaire grâce à des techniques utilisant les données rendues disponibles par la reconstruction et d'obtenir ainsi une meilleure identification grâce une image tridimensionnelle complète.

Lorsque l'identification de l'étape 5) n'est toujours pas réussie, réitérer les étapes 2), 3), 4) et 5) avec de nouvelles caractéristiques F2 du volume (12) contenant l'objet.

Selon une caractéristique de l'invention, lorsque l'identification de l'étape 5) n'est pas réussie, il comporte des étapes pour :
- extraire des invariants F3 dans les données de D au moyen d'un module (9) de recherche d'invariants,
- compléter avec ces invariants F3, l'ensemble C de données caractérisant la surface externe de l'objet,
- injecter ces invariants F3 dans une base de données (8) d'invariants,
- réitérer les étapes 4) et 5) à partir de ce nouvel ensemble C.

L'étape 4 de remplissage de zones lacunaires comprend éventuellement les sous-étapes suivantes :
- Etape 41), normaliser les données de C caractérisant la surface externe, pour obtenir un ensemble D12 des données de C normalisées,
- Etape 42) à partir des données de D12, extraire des données pertinentes désignées attracteurs et les pondérer, en fonction de critères d'extraction et de pondération F75, pour obtenir un ensemble D34 d'attracteurs pondérés,
- Etape 43) parmi les données de l'ensemble D34, sélectionner des attracteurs significatifs en fonction d'un seuil de sélection F74,
- Etape 44) renforcer le poids des attracteurs significatifs en fonction de données de C spatialement proches, pour obtenir un ensemble D56 d'attracteurs significatifs renforcés,
- Etape 45) à partir des données de D12 et de D56, générer une surface tridimensionnelle D.

Selon une caractéristique de l'invention, l'étape 4) de remplissage de zones lacunaires comprend avant l'étape 42), une sous-étape 41 bis) pour normaliser les invariants, et obtenir ainsi un ensemble D23 d'invariants normalisés et en ce que l'étape 42) est réalisée à partir des données de D12 et de D23.

Lorsque l'identification de l'étape 5) n'est pas réussie, réitérer les étapes 43), 44), 45) et 5) avec un nouveau seuil de sélection F74.

De nouveau, lorsque l'identification de l'étape 5) n'est pas réussie, réitérer les étapes 42), 43), 44), 45) et 5) avec de nouveaux critères d'extraction et de pondération F75.

Lorsque l'identification de l'étape 5) n'est toujours pas réussie, réitérer les étapes 42), 43), 44), 45) et 5) et si l'étape d'extraction d'invariants est réalisée, elle l'est à partir des données de D et dans la base de données d'invariants (8).

L'identification peut être assurée par un utilisateur ou par un système d'identification automatique.

Les signaux sont captés par un système d'imagerie active ou passive dans le domaine visible ou IR.

D'autres caractéristiques et avantages de l'invention apparaîtront à la lecture de la description détaillée qui suit, faite à titre d'exemple non limitatif et en référence aux dessins annexés dans lesquels :
la figure 1 représente une image d'une scène avec un objet partiellement camouflé, telle qu'acquise par un capteur d'images,
la figure 2 représente un exemple de vue des données C, c'est-à-dire un ensemble de points repérés dans l'espace 3D, assortis de leur intensité (les points ont la même intensité sur cette figure) caractérisant les différentes surfaces de l'objet de la figure 1, obtenues par le processus de reconstruction ainsi que le volume contenant l'objet, en l'occurrence un parallélépipède rectangle,
la figure 3 est un diagramme montrant l'enchaînement des étapes du procédé selon l'invention,
la figure 4 est un diagramme montrant l'enchaînement des sous-étapes de l'étape 4 de remplissage des zones lacunaires,
la figure 5 est un diagramme montrant l'enchaînement des sous-étapes de l'étape 45 de génération de surface 3D.

D'une figure à l'autre, les mêmes éléments sont repérés par les mêmes références.

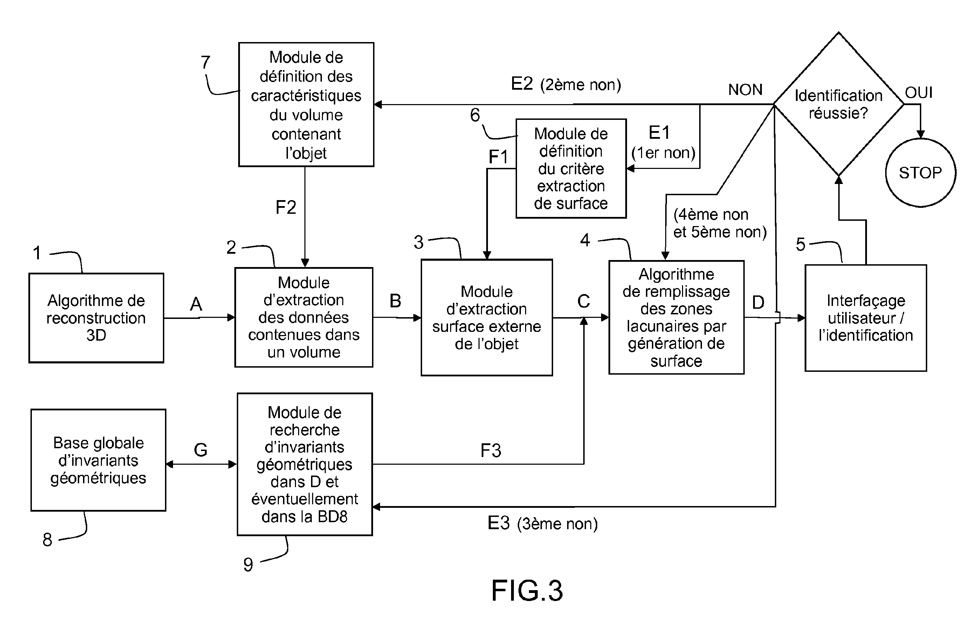

On décrit en relation avec la figure 3 un exemple de procédé de complétion de données pour une reconstruction tridimensionnelle d'objets selon l'invention. Il comporte les étapes suivantes consistant dans l'ordre à :
1) A partir des signaux rétrodiffusés par la scène 1, générer un ensemble de points repérés dans l'espace tridimensionnel auxquels sont affectées des intensités de rétrodiffusion par la scène, désigné ensemble de données reconstruites. Cet ensemble de données reconstruites peut être généré en utilisant un procédé connu de l'homme du métier tel que décrit en préambule comme un procédé de reconstruction tridimensionnelle tomographique, ou profilométrique c'est-à-dire prenant en compte le temps de vol de l'onde laser. De préférence, débruiter ces données reconstruites pour obtenir un ensemble de données reconstruites utiles. On désigne A cet ensemble de données reconstruites utiles ou non.
2) A partir des données reconstruites de l'ensemble A, extraire un ensemble B de ces données, cet ensemble B étant inscrit dans un volume 12 contenant l'objet (dont un exemple est montré figure 2). Il s'agit par exemple d'un parallélépipède rectangle dont l'extraction est par exemple basée sur des découpes volumiques [(Xmin Xmax) ;(Ymin,Ymax) ;(Zmin ;Zmax)] englobant les données liées à l'objet. Les caractéristiques F2 de ce volume peuvent être prédéfinies ou définies par l'utilisateur ou par un module 7 de pilotage de ces caractéristiques ; elles sont par exemple définies par l'utilisateur lors d'une première itération du procédé, et par ce module de pilotage lors des éventuelles itérations suivantes. Ce module de pilotage 7 est par exemple basé sur une recherche dans des tables de correspondances, ou sur une grille associative de type Kohonen, ou sur une base de connaissances générée par apprentissage adaptatif supervisé ou non, ou orientée par l'utilisateur via des zooms sur les données de A.
3) A partir de l'ensemble des données B, extraire un ensemble C de points repérés dans l'espace 3D et associés à leurs intensités, caractérisant la surface externe de l'objet, cette surface présentant des zones lacunaires en raison notamment du camouflage. Un exemple 11 d'ensemble C est montré figure 2. Cette extraction est par exemple basée sur des seuillages en intensité et/ou sur des fonctions de type isosurface avec :
   a. seuillage en intensité et/ou
   b. maillage de facettes (triangulaires ou rectangulaires ou hexagonales) et/ou
   c. extraction des sommets de facettes ainsi que des normales associées à chaque sommet, avec un critère de sélection des points à partir des normales (produit scalaire et barycentre, par exemple) et avec l'extraction des points extérieurs et/ou intérieurs aux facettes.
   Les valeurs F1 de ces critères d'extraction peuvent être prédéfinies ou définies par l'utilisateur ou par un module de pilotage 6 de ces critères d'extraction qui est par exemple basé sur une recherche dans des tables de correspondances, ou sur une grille associative de type Kohonen, ou sur une base de connaissances générée par apprentissage adaptatif supervisé ou non.
4) Remplir les zones lacunaires de l'ensemble C par génération d'une surface D tridimensionnelle complétée de l'objet. Des exemples de génération de surface sont donnés plus loin. Cette étape est réalisée sans recourir à des modèles CAO ou autres d'une base de données extérieure, comme par exemple des attributs géométriques obtenus en dehors du procédé de reconstruction et d'identification.
5) A à partir des données D complétées de l'objet, identifier l'objet. Cette identification peut être assurée par un utilisateur à l'aide d'une Interface utilisateur dédiée telle qu'une interface tactile et/ou à écran et clavier et/ou à reconnaissance vocale, permettant éventuellement à l'utilisateur de réaliser des zooms sur les données tridimensionnelles et de prendre la décision sur la réussite de l'identification de l'objet. Cette identification peut aussi être assurée par un système d'identification automatique par exemple un système basé sur la reconnaissance de formes.

Lorsque l'identification est réussie, le procédé est stoppé.

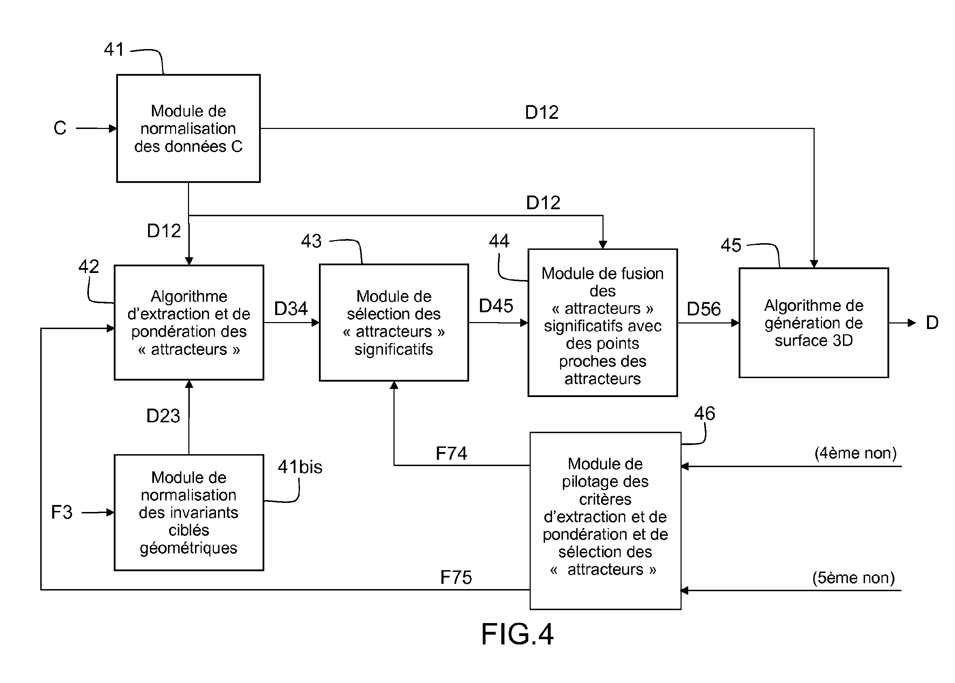

On va à présent décrire plus en détail l'étape 4 de remplissage des surfaces lacunaires. Elle comporte par exemple dans l'ordre les sous-étapes suivantes décrites en relation avec la figure 4 :
41) Appliquer un processus de normalisation aux données de C caractérisant la surface externe de la cible. Ce processus de normalisation permet de mettre à l'échelle l'ensemble des données de C et d'effectuer leur analyse en composantes principales telles que des courbes, des surfaces, des volumes principaux. Les données de C normalisées forment un ensemble D12.
42) A partir des données de C normalisées D12 et éventuellement à partir d'invariants normalisés D23 comme on le verra plus loin, extraire des « attracteurs d'information tridimensionnelle liée à l'objet » et les pondérer par rapport au nombre des points situés dans une zone topologique liée à un seuil prédéterminé de nombre de points, définie à l'aide d'une métrique liée à l'espace tridimensionnel (par exemple une distance euclidienne), ces attracteurs pondérés formant un ensemble D34. Ils sont extraits et pondérés en fonction de critères d'extraction et de pondération F75 qui peuvent être prédéterminés ou déterminés par l'utilisateur ou par un module 46 de pilotage de ces critères F75. Les attracteurs sont des données géométriques pertinentes issues de l'ensemble A, telles que des points, des lignes, des courbes, des volumes, et représentatives des données de A. Cette extraction-pondération est de type déterministe avec par exemple une optimisation sous contraintes en utilisant éventuellement l'algorithme du point intérieur et/ou une optimisation stochastique basée par exemple sur les réseaux de Hopfield, ou les réseaux de Boltzmann, ou le Recuit Simulé.
43) Sélectionner parmi l'ensemble D34, des attracteurs significatifs par rapport à un seuil de sélection F74, ces attracteurs significatifs formant un ensemble D45. Le seuil de sélection F74 peut être prédéterminé ou déterminé par l'utilisateur ou par le module 46 également apte à piloter ce seuil de pondération ; il est par exemple déterminé par l'utilisateur lors d'une première itération de ces étapes, et par ce module de pilotage 46 lors des éventuelles itérations suivantes. Ce module de pilotage 46 ainsi que cette sélection 43 sont par exemple basés sur une grille associative de type Kohonen, ou sur une base de connaissances générée par un apprentissage adaptatif supervisé ou non et/ou sur des mémoires associatives et/ou sur des arbres de classification.
44) Fusionner les attracteurs significatifs D45 c'est-à-dire renforcer leur poids avec ceux de leurs points proches extraits des données D12, ces attracteurs renforcés formant un ensemble D56. Cette étape est par exemple basée sur une grille associative de type Kohonen, ou sur une base de connaissances générée par un apprentissage adaptatif supervisé ou non, ou sur toute autre méthode de fusion de données.
45) Générer une surface tridimensionnelle à partir des données D12 et des attracteurs renforcés D56, les données de cette surface formant l'ensemble D.

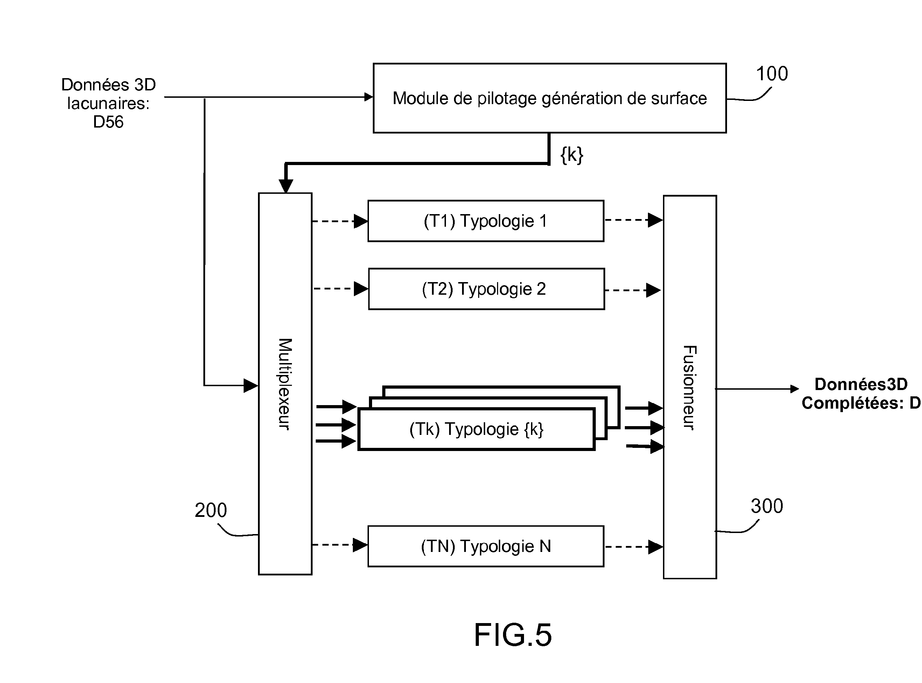

L'étape 45 de génération de surface tridimensionnelle D décrite en relation avec la figure 5, comporte par exemple dans l'ordre les étapes suivantes :
- Envoyer au moyen d'un module 100 de pilotage des procédés de génération de surface, les données contenues dans les données tridimensionnelles lacunaires (= l'ensemble D56) vers des procédés de génération de surface 3D (désignés typologie 1, ..., typologie k, ..., typologie N). En fonction des données D56, le module de pilotage 100 choisit un ou plusieurs (voire tous) procédés de génération de surface 3D ; à chaque procédé choisi, sont envoyées les données D56 via un Multiplexeur 200. Ce module de pilotage est par exemple basé sur une recherche dans des tables de correspondances, sur une grille associative de type Kohonen, sur une base de connaissance générée par apprentissage adaptatif (supervisée ou non) et/ou de mémoires associatives et/ou d'arbres de classification.
- Chaque procédé choisi fournit un ensemble de données complétées D1, D2, ..., Dk, ... DN. Parmi les procédés de génération de surface 3D utilisés, on peut citer des algorithmes de type recherche d'une énergie minimale (par exemple énergie potentielle de points) liée aux données D56, ou de type relaxation stochastique (Hopfield, Boltzmann, Recuit Simulé, par exemple), ou de type Régulation Bayésienne (directe et/ou de rétropropagation), ou de type Analyse par ondelettes (ondelettes orthogonales, ondelettes continues, ondelettes discrètes, analyse multi résolution), ou de type Approximation par régression généralisée (linéaire et/ou non-linéaire), ou de type Optimisation sous contraintes (optimisation de Newton, optimisation de Levenberg-Marquandt, par exemple), ou de type Fonctions radiales de base (Generalized Regression Networks, Probabilistic Neural Networks) ou des hybridations de ces approches algorithmiques.
- Fusionner (avec par exemple en outre un filtrage de points aberrants) les données complétées D1, ..., DN, à l'aide d'un fusionneur 300 pour obtenir D ; éventuellement la fusion consiste simplement à choisir le meilleur résultat parmi les D1, ..., DN. La fusion est par exemple basée sur une table de correspondance, ou sur une carte auto organisatrice de Kohonen, ou sur une base de connaissances générée par apprentissage adaptatif (supervisé ou non) et/ou sur des mémoires associatives et/ou des arbres de classification et/ou toute méthode de fusions de données.

On se reporte à présent sur la figure 3. Si à l'issue de l'étape 5, l'identification de l'objet n'est pas réussie (→ 1er non), un nouveau critère d'extraction de surface est défini et un nouvel ensemble C caractérisant la surface externe de l'objet est extrait (étape 3). Ce nouveau critère d'extraction est par exemple défini via une requête E1 envoyée vers le module de pilotage 6 de ces critères d'extraction, qui établit ce nouveau critère F1 comme indiqué précédemment ou par exemple par incrémentation selon une loi préétablie. Selon une alternative, il peut être défini par l'utilisateur via son interface. Ce critère F1 est alors envoyé au module d'extraction de l'étape 3 qui délivre les nouvelles données de C.

Puis l'étape 4 est réitérée à partir de ce nouvel ensemble C pour générer un nouvel ensemble D de données complétées de l'objet, suivie de l'étape 5 d'identification.

Si l'identification de l'objet n'est pas réussie (→ 2è non), les caractéristiques F2 d'un nouveau volume contenant l'objet sont définies ainsi qu'un nouvel ensemble B de points repérés dans ce nouveau volume auxquels sont affectées les intensités de rétrodiffusion par l'objet. Ce nouveau volume est par exemple défini via une requête E2 de définition des caractéristiques de ce nouveau volume, envoyée vers le module 7 de pilotage de ces caractéristiques, qui détermine F2 comme indiqué précédemment ou par exemple par incrémentation selon une loi préétablie. Selon une alternative, elles peuvent être définies par l'utilisateur via son interface. Puis les étapes 2, 3, 4 et 5 sont réalisées à partir de ce nouveau volume.

Eventuellement, si l'identification de la cible n'est pas réussie (→ 3è non) :
- Envoyer une requête d'invariants E3 vers un module 9 de recherche d'invariants.
- Rechercher des invariants géométriques ciblés F3 au moyen du module 9 en fonction de certains éléments de D (par exemple, une partie de cylindre, une gamme de dimensions, ...) à partir de tables de correspondance et/ou d'une base de connaissance générée par apprentissage adaptatif (supervisé ou non) et/ou de mémoires associatives et/ou d'arbres de classification. Ces invariants géométriques sont créés pendant le processus de reconstruction tridimensionnelle sans avoir recours à des données provenant de bases externes au procédé. Ces invariants ciblés sont alors introduits (G) dans une base de données 8 d'invariants, qui comporte des éléments reconnus (par exemple une roue, un capot, un bas de caisse, ...), respectivement associés à des invariants géométriques de type : objet global reconstruit, dimensions de l'objet, rapports dimensionnels de l'objet, .... Ces invariants ne sont pas nécessairement que géométriques ; ils peuvent inclure des informations de type couleur, texture, ou autre. Cette base de données 8 n'est donc alimentée qu'au fur et à mesure des itérations du procédé.
- A partir de ces invariants géométriques ciblés F3 et de l'ensemble C caractérisant la surface externe de la cible, réaliser l'étape 4 de remplissage des surfaces lacunaires, pour générer un nouvel ensemble D de données complétées. On se reporte à la figure 4. Les sous-étapes de l'étape 4 comportent alors avant la sous-étape 42, une sous-étape supplémentaire 41 bis :
   ○ Appliquer un processus de normalisation aux invariants ciblés F3. Ce processus de normalisation permet de mettre à l'échelle ces invariants F3 et d'effectuer leur analyse en composantes principales. Les données de F3 normalisées forment un ensemble D23.
   ○ La sous-étape 42 est alors réalisée à partir de D12 et de D23.
- Puis enchaîner avec les étapes 43, 44, 45 et 5.

Si l'identification de la cible n'est pas réussie (→ 4è non) :
un nouveau seuil de sélection des attracteurs significatifs F74 est déterminé par le module de pilotage 46 du seuil de sélection, et l'étape 43 de sélection est réitérée à partir de ce nouveau seuil et de l'ensemble D34, et délivre des nouveaux attracteurs significatifs D45. Les étapes 44 et 45 sont réitérées et de nouvelles données complétées D sont générées en vue de leur identification au cours de l'étape 5.

Si l'identification de la cible n'est pas réussie (→ 5è non) à l'issue de l'étape précédente, réitérer l'étape 42 en modifiant les critères d'extraction et de pondération F75 des attracteurs par le module 46 de pilotage de ces critères d'extraction et de pondération, pour obtenir un nouvel ensemble D34. Puis enchaîner les étapes 43, 44, 45 et 5 à partir de ces nouvelles données D34.

Si l'identification de la cible n'est pas réussie, réitérer l'enchaînement des étapes 2, 3, 4 et 5 comme indiqué précédemment. Si une recherche d'invariants géométriques est réalisée, elle le sera à partir des données de D et dans la base de données des invariants géométriques 8.

Si l'identification de la cible n'est pas réussie le procédé peut continuer en réitérant les étapes telles que décrites, l'utilisateur ayant la possibilité d'arrêter le procédé de traitement à tout moment.

Dans les exemples d'itérations précédemment décrits dans le cas où l'identification n'est pas réussie, l'ordre des étapes peut être changé. Les étapes suivant le 3è non peuvent être changées avec celles suivant le 1^{er} non et inversement. De même, celles suivant le 2è non peuvent être changées avec celles suivant le 4è non, et inversement.

Ces techniques peuvent être intégrées dans des équipements optroniques d'identification des cibles dites « difficiles » à moyenne distance (de quelques centaines de mètres à quelques kilomètres). Ces équipements sont intégrables dans un système UAV, hélicoptère ou avion pour une reconnaissance basse altitude.

Ces techniques d'imagerie laser 3D s'appliquent également au domaine biomédical notamment pour l'identification de désordres sous-cutanés.

## Revendications

1. Procédé de reconstruction 3D d'un objet (10) d'une scène (1) exposée à une onde, à partir de signaux rétrodiffusés par la scène et captés, qui comprend :
- Etape 1) générer à partir des signaux captés, un ensemble de points 3D auxquels est respectivement affectée leur intensité de rétrodiffusion par la scène, ces points 3D associés à leur intensité étant désignés ensemble A de données reconstruites,
- Etape 2) à partir de cet ensemble A de données reconstruites, extraire un ensemble B de données dont les points sont inscrits dans un volume (12) contenant l'objet, en fonction de caractéristiques F2 de volume,
- Etape 3) à partir de l'ensemble B, extraire un ensemble C de données caractérisant la surface externe de l'objet, cette surface présentant des zones lacunaires, en fonction d'un critère d'extraction F1,
- Etape 4) à partir des données de C, remplir les zones lacunaires par génération de surface tridimensionnelle pour obtenir un ensemble D de données complétées de l'objet, sans recourir à une base de données extérieure,
- Etape 5) identifier l'objet à partir de l'ensemble D,
**caractérisé en ce que** lorsque l'identification de l'étape 5) n'est pas réussie, réitérer les étapes 3), 4) et 5) avec un nouveau critère F1.

2. Procédé de reconstruction 3D d'un objet selon la revendication précédente, **caractérisé en ce que** lorsque l'identification de l'étape 5) n'est pas réussie, réitérer les étapes 2), 3), 4) et 5) avec de nouvelles caractéristiques F2 du volume (12) contenant l'objet.

3. Procédé de reconstruction 3D d'un objet selon la revendication précédente, **caractérisé en ce que** lorsque l'identification de l'étape 5) n'est pas réussie, il comporte des étapes pour :
- extraire des invariants F3 dans les données de D au moyen d'un module (9) de recherche d'invariants,
- compléter avec ces invariants F3, l'ensemble C de données caractérisant la surface externe de l'objet,
- injecter ces invariants F3 dans une base de données (8) d'invariants,
- réitérer les étapes 4) et 5) à partir de ce nouvel ensemble C.

4. Procédé de reconstruction 3D d'un objet selon l'une des revendications précédentes, **caractérisé en ce que** l'étape 4 de remplissage de zones lacunaires comprend les sous-étapes suivantes :
- Etape 41), normaliser les données de C caractérisant la surface externe, pour obtenir un ensemble D12 des données de C normalisées,
- Etape 42) à partir des données de D12, extraire des données pertinentes désignées attracteurs et les pondérer, en fonction de critères d'extraction et de pondération F75, pour obtenir un ensemble D34 d'attracteurs pondérés,
- Etape 43) parmi les données de l'ensemble D34, sélectionner des attracteurs significatifs en fonction d'un seuil de sélection F74,
- Etape 44) renforcer le poids des attracteurs significatifs en fonction de données de C spatialement proches, pour obtenir un ensemble D56 d'attracteurs significatifs renforcés,
- Etape 45) à partir des données de D12 et de D56, générer une surface tridimensionnelle D.

5. Procédé de reconstruction 3D d'un objet selon les revendications 3 et 4 prises en combinaison, **caractérisé en ce que** l'étape 4) de remplissage de zones lacunaires comprend avant l'étape 42), une sous-étape 41 bis) pour normaliser les invariants, et obtenir ainsi un ensemble D23 d'invariants normalisés et **en ce que** l'étape 42) est réalisée à partir des données de D12 et de D23.

6. Procédé de reconstruction 3D d'un objet selon l'une des revendications 4 ou 5, **caractérisé en ce que** lorsque l'identification de l'étape 5) n'est pas réussie, réitérer les étapes 43), 44), 45) et 5) avec un nouveau seuil de sélection F74.

7. Procédé de reconstruction 3D d'un objet selon la revendication précédente, **caractérisé en ce que** lorsque l'identification de l'étape 5) n'est pas réussie, réitérer les étapes 42), 43), 44), 45) et 5) avec de nouveaux critères d'extraction et de pondération F75.

8. Procédé de reconstruction 3D d'un objet selon la revendication précédente, **caractérisé en ce que** lorsque l'identification de l'étape 5) n'est pas réussie, réitérer les étapes 42), 43), 44), 45) et 5) et si l'étape d'extraction d'invariants est réalisée, elle l'est à partir des données de D et dans la base de données d'invariants (8).

9. Procédé selon l'une des revendications précédentes, **caractérisé en ce que** l'identification est assurée par un utilisateur ou par un système d'identification automatique.

10. Procédé selon l'une des revendications précédentes, **caractérisé en ce que** les signaux sont captés par un système d'imagerie active ou passive dans le domaine visible ou IR.
